# FASCICULE DE BREVET EUROPEEN

(11) **EP 1 326 124 B1**
(45) Date de publication et mention de la délivrance du brevet: **11.08.2004**
(21) Numéro de dépôt: 01420229.5
(22) Date de dépôt: 29.11.2001
(51) Int. Cl.: G02C 5/22

(54) **Charnière élastique pour monture de lunettes comprenant un axe d'articulation en forme de diabolo**
Federscharnier für Brillengestell mit diaboloformiger Drehachse
Resilient hinge for spectacles frame with a diabolo type pivot axis

(43) Date de publication de la demande: 09.07.2003
(73) Titulaire: SIPAL S.A., F-39400 Morez (FR)
(72) Inventeur: Kerjean, Alain, 39200 Saint-Claude (FR)
(74) Mandataire: Moinas, Michel

(56) Documents cités:
- EP-A- 0 345 145
- EP-A- 0 572 703
- EP-A- 0 892 296
- WO-A-94/28454

## Description

L'invention se rapporte à une charnière élastique pour monture de lunettes et plus particutièrement à un type de charnière élastique comprenant un premier et un deuxième éléments de charnière possédant respectivement un premier et un deuxième charnon munis de perçages pour recevoir un axe d'articulation lorsque le deuxième charnon est engagé entre deux portées du premier charnon de façon telle à superposer les perçages suivant une même direction axiale contre la compression d'un ressort logé dans l'un des deux éléments de charnière.

Une charnière de ce type est connue par exemple du document EP-A-345 145. L'axe d'articulation comprend une partie filetée pour être vissé dans un taraudage de l'un des perçages du premier charnon. Le taraudage impose une épaisseur minimale de la portée du chamon dans laquelle le perçage est réalisé. Si l'on souhaite, pour des raisons esthétiques, diminuer cette épaisseur, il devient nécessaire de prévoir des bossages pour restaurer localement l'épaisseur minimale imposée par le taraudage. Ces opérations entraînent des complications d'usinage et augmentent les coûts de fabrication. De surcroît, les opérations de vissage et de dévissage de l'axe d'articulation peuvent entraîner des rayures sur les portées du premier charnon.

L'invention se rapporte encore plus particulièrement à une charnière élastique comprenant un premier et un deuxième éléments de charnière possédant respectivement un premier et un deuxième charnon munis de perçages pour recevoir un axe d'articulation lorsque le deuxième charnon est engagé entre deux portées du premier charnon de façon telle à superposer les perçages suivant une même direction axiale contre la compression d'un ressort logé dans l'un des deux éléments de charnière, caractérisée en ce que l'axe d'articulation comprend deux têtes et un corps solidaire des deux têtes pour être engagé en translation à travers les perçages des charnons jusqu'à ce que les deux têtes soient reçues dans les perçages des deux portées du premier charnon, le corps formant par rapport aux deux têtes un décrochement pour être reçu dans le perçage du deuxième charnon en décalant ce dernier par rapport à la direction axiale des perçages du premier charnon contre la compression du ressort.

Le décalage du deuxième charnon par rapport à la direction axiale des perçages du premier charnon permet de retenir l'axe d'articulation entre les deux portées du premier chamon. De cette façon, il n'est plus nécessaire de prévoir un filetage sur l'axe d'articulation ni un taraudage correspondant sur une des portées de ce premier chamon. L'axe d'articulation est simplement engagé en translation à travers les perçages des chamons superposés suivant une même direction axiale, contrairement au cas d'un axe fileté nécessitant d'être vissé dans le taraudage du premier charnon.

L'axe d'articulation d'une telle charnière élastique est également désigné par un diabolo.

L'un des buts de l'invention est de contribuer à réduire un jeu de guidage entre les deux éléments de charnière.

A cet effet, l'invention a pour objet une charnière élastique pour monture de lunettes selon le préambule de la revendication 1, caractérisée ce que le perçage du deuxième charnon comprend une portion de forme correspondante au corps de l'axe d'articulation. De cette façon, on augmente la surface de contact entre le corps de l'axe d'articulation et le perçage du deuxième charnon en contribuant à réduire le jeu de guidage entre les deux éléments de charnière.

Selon un premier mode avantageux de réalisation d'une charnière selon l'invention, les deux portées du premier charnon sont jointives le long d'un profil intérieur à ce charnon s'étendant d'arrière en avant par rapport à la direction axiale des perçages dans un plan perpendiculaire à cette direction axiale. Cet agencement permet de rigidifier les deux portées du premier charnon l'une par rapport à l'autre tout le long du profil intérieur jointif.

De surcroît, selon ce mode de réalisation, une partie du profil intérieur s'étendant en avant par rapport à la direction axiale forme avantageusement une butée contre laquelle le deuxième chamon vient en appui lorsque l'on ouvre la charnière dans une position allant au-delà de la position d'ouverture normale.

Selon un deuxième mode avantageux de réalisation, les têtes de l'axe d'articulation et les perçages des portées du premier charnon ont des formes correspondantes polygonales.

D'autres avantages de l'invention apparaîtront à la lecture de la description d'un mode de réalisation illustré par les dessins.
La figure 1 est une vue éclatée en coupe partielle d'une charnière selon l'invention.
La figure 2 est une vue en coupe de la charnière illustrée par la figure 1 selon une position fermée.
La figure 3 est une vue en coupe de la charnière illustrée par la figure 1 selon une position ouverte.
La figure 4 est une vue en coupe de la charnière illustrée par la figure 1 selon une position de sur-ouverture.

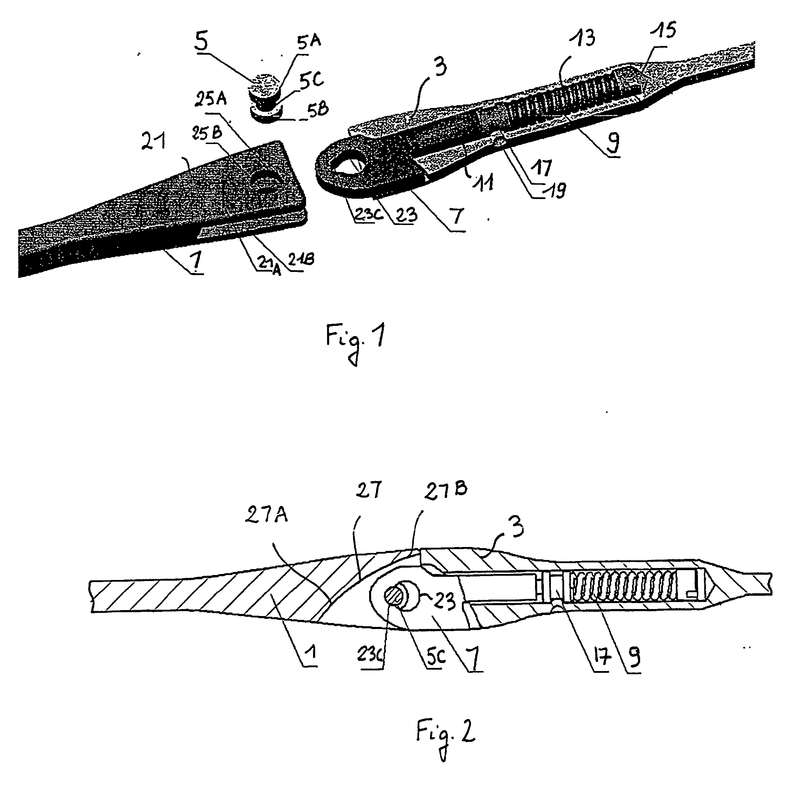

Par référence aux figures 1 à 4, une charnière élastique pour monture de lunettes comprend un premier 1 et un deuxième 3 éléments de charnière, respectivement solidaire d'un tenon et d'une branche de la monture. Le premier 1 et le deuxième 3 éléments possèdent respectivement un premier 21 et un deuxième 7 charnons munis de perçages 23,25A,25B pour recevoir un axe d'articulation 5 lorsque le deuxième charnon 7 est engagé entre deux portées 21A,21B solidaires du premier charnon 21 de façon telle à superposer les perçages suivant une même direction axiale A contre la compression d'un ressort 9 logé dans l'un 3 des deux éléments de charnière.

Dans l'exemple particulier choisi pour illustrer l'invention, le premier charnon 21 est solidaire du premier élément de charnière 1 et le deuxième charnon 7 est mobile en translation dans un logement du deuxième élément de charnière 3 contre la compression du ressort 9 logé dans cet élément 3. Le charnon mobile 7 est solidaire d'une coulisse 11 appartenant à un mécanisme comprenant une tige 13 autour de laquelle est disposé le ressort 9. Ce dernier est comprimé d'une part entre une butée 15 formée à l'extrémité de la tige 13 et une douille de blocage 17 disposée à l'autre extrémité de la tige 13. Cette douille de blocage 17 est immobilisée par rapport à l'élément de charnière 3 dans lequel est logé le chamon mobile 7 par une butée 19 obtenue par exemple par sertissage.

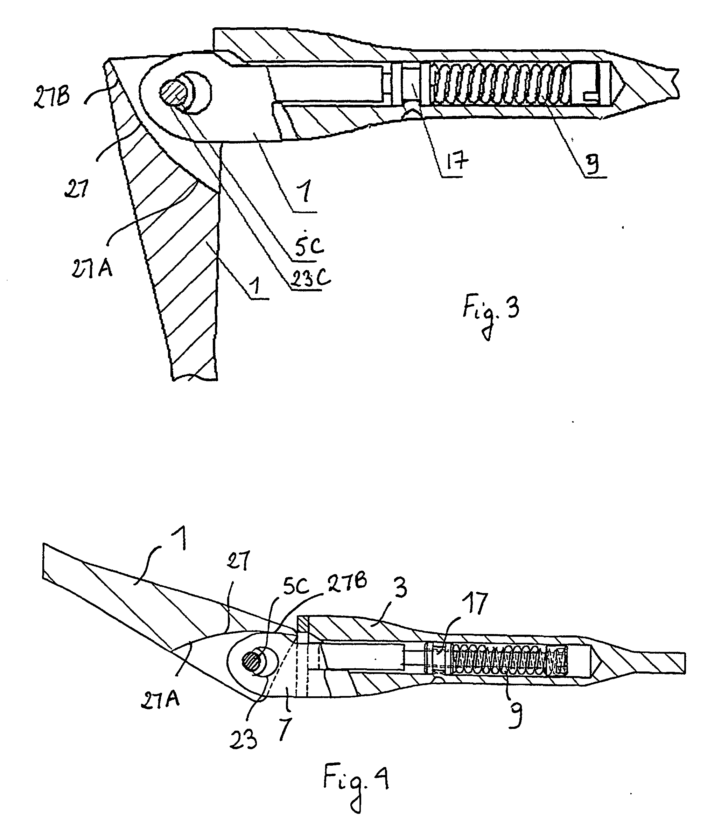

Les deux éléments de charnière 1,3 sont mobiles en rotation l'un par rapport à l'autre autour de l'axe d'articulation 5 distinct du premier et du deuxième élément. D'une façon connue en soi, les portées 21A,21B du premier charnon 21 sont conformées en came pour déplacer le charnon mobile 7 en translation par rapport à l'élément de charnière 3 dans lequel il est incorporé contre la compression du ressort 9. D'où il résulte que la charnière élastique possède deux positions stables d'ouverture normale et de fermeture dans lesquelles les deux éléments de charnière 1,3 sont respectivement alignés l'un par rapport à l'autre ou disposés sensiblement perpendiculairement l'un par rapport à l'autre, comme illustré par les figures 2 et 3.

L'axe d'articulation 5 comprend deux têtes 5A,5B et un corps 5C solidaire des deux têtes 5A,5B pour être engagé en translation à travers les perçages 25A,25B du premier chamon 21 et le perçage 23 du deuxième charnon 7 jusqu'à ce que les deux têtes 5A,5B soient reçues dans les perçages 25A,25B du premier charnon 21, le corps 5C formant par rapport aux deux têtes 5A,5B un décrochement pour être reçu dans le perçage 23 du deuxième charnon 7 en décalant ce dernier 7 par rapport à la direction axiale A des perçages 25A,25B du premier charnon 21 contre la compression du ressort 9.

Dans le mode de réalisation illustré par les figures 1 à 4, le corps 5C de l'axe d'articulation 5 possède une hauteur H légèrement supérieure à l'épaisseur E du deuxième charnon mobile 7 pour être reçu dans le perçage 23 de ce dernier et ainsi lui permettre d'être décalé par rapport à la direction axiale A des perçages 25A,21B du premier charnon fixe 21 contre la compression du ressort 9. Le perçage 23 du deuxième charnon 7 comprend une portion 23C de forme correspondante au corps 5C de l'axe d'articulation 5. Comme également visible sur les figures, le corps 5C de l'axe d'articulation 5 et la portion 23C de forme correspondante du deuxième charnon 7 sont de forme circulaire. Les têtes 5A,5B de l'axe d'articulation 5 et les perçages 25A,25B des portées 21A,21B du premier charnon 21 ont également des formes correspondantes circulaires. Dans cet agencement, le décrochement D est défini par la différence des diamètres des formes circulaires du corps et des têtes. De surcroît, les têtes 5A,5B de l'axe d'articulation 5 sont identiques ainsi que les perçages 25A,25B du premier charnon. De cette façon, l'axe d'articulation peut être engagé en translation dans un sens ou dans un sens opposé suivant la même direction axiale des perçages des deux charnons.

En référence plus particulièrement aux figures 2 à 4, les deux portées 21A,21B du premier charnon 21 sont jointives le long d'un profil 27 intérieur à ce chamon s'étendant d'arrière 27A en avant 27B par rapport à la direction axiale A des perçages 25A,25B dans un plan perpendiculaire à cette direction axiale A. Les deux portées 25A,25B sont par exemple fraisées dans l'épaisseur du charnon premier 21 de façon à former le profil intérieur jointif 27. Cet agencement permet de rigidifier les deux portées 21A,21 B du premier chamon 21 l'une par rapport à l'autre tout le long du profil intérieur 27.

De surcroît, une partie du profil intérieur 27 s'étendant en avant par rapport à la direction axiale A forme une butée 27B contre laquelle le deuxième charnon 7 vient en appui lorsque l'on ouvre la charnière dans une position de sur-ouverture, c'est à dire au-delà de la position d'ouverture normale et comme illustrée par la figure 4. Cet agencement permet d'éviter une contrainte excessive sur la tige 13 du mécanisme de rappel élastique de la charnière illustrée par les figures. La résistance en sur-ouverture n'est plus assurée par la tige elle-même mais par le deuxième charnon 7 en butée contre la partie avant 27B du profil intérieur 27 formé à la jonction des deux portées 21A,21B du premier charnon 21.

Il est prévu de concevoir les têtes 5A,5B de l'axe d'articulation 5 et les perçages 25A,25B des portées 21A,21B du premier charnon 21 suivant des formes correspondantes polygonales, en étoile ou cannelées. De surcroît, l'une des deux têtes de l'axe d'articulation ainsi que la portée du premier charnon dans laquelle elle est reçue peuvent être de forme différente par rapport à l'autre tête et à l'autre portée correspondante.

Dans une charnière élastique selon l'invention, à l'exemple du mode de réalisation illustré par les figures 1 à 4, l'axe d'articulation réalise un assemblage des deux éléments de charnière tout en étant retenu entre les deux éléments sans nécessiter un filetage ni un taraudage d'un des perçages du premier charnon. Cet agencement permet de diminuer l'épaisseur minimale des portées de ce charnon par rapport à une vis d'articulation. L'absence de taraudage permet à l'axe d'articulation, au tenon et à la branche de la monture d'être des pièces fabriquées dans différents matériaux plastiques, métalliques ou céramiques par exemple et réalisées suivant différentes techniques de fabrication comme par exemple, l'injection, le frittage, la découpe et pliage. Il est également prévu de concevoir la fabrication de l'axe d'articulation selon un procédé de moulage par injection de poudre métallique. Enfin, la simplicité d'usinage limite le nombre de reprises d'usinage.

## Revendications

1. Charnière élastique pour monture de lunettes, comprenant un premier (1) et un deuxième (3) éléments de charnière possédant respectivement un premier (21) et un deuxième (7) charnons munis de perçages (23,25A,25B) pour recevoir un axe d'articulation (5) lorsque le deuxième charnon (7) est engagé entre deux portées (21A,21B) du premier charnon (21) de façon telle à superposer les perçages suivant une même direction axiale (A) contre la compression d'un ressort (9) logé dans l'un des deux éléments de charnière, l'axe d'articulation étant non fileté et comprenant deux têtes (5A,5B) et un corps (5C) solidaire des deux têtes pour être engagé en transition à travers les perçages (23,25A,25B) des charnons (7,21) jusqu'à ce que les deux têtes (5A,5B) soient reçues dans les perçages (25A,25B) des deux portées (21A,21B) du premier charnon (21), le corps formant par rapport aux deux têtes un décrochement (D) pour être reçu dans le perçage (23) du deuxième charnon (7) en décalant ce dernier (7) par rapport à la direction axiale (A) des perçages (25A,25B) du premier charnon (21) contre la compression du ressort (9),
**caractérisée en ce que** le perçage (23) du deuxième charnon (7) comprend une portion (23C) de forme correspondante au corps (5C) de l'axe d'articulation.

2. Charnière selon le revendication 1, **caractérisée en ce que** le corps (5C) de l'axe d'articulation et la portion (23C) de forme correspondante du deuxième charnon (7) sont de forme circulaire.

3. Charnière élastique selon la revendication 1, **caractérisée en ce que** les deux portées (21A,21B) du premier charnon (21) sont jointives le long d'un profil (27) intérieur à ce charnon s'étendant d'arrière (27A) en avant (27B) par rapport à la direction axiale (A) des perçages (25A,25B) dans un plan perpendiculaire à cette direction axiale (A).

4. Charnière selon la revendication 3, **caractérisée en ce qu'**une partie du profil intérieur (27) s'étendant en avant par rapport à la direction axiale (A) forme une butée (27B) contre laquelle le deuxième charnon (7) vient en appui lorsque l'on ouvre la charnière dans une position allant au-delà d'une position d'ouverture normale.

5. Charnière selon la revendication 1, **caractérisée en ce que** les têtes (5A,5B) de l'axe d'articulation et les perçages (25A,25B) des portées (21A,21B) du premier charnon (21) ont des formes correspondantes polygonales, en étoile ou cannelées.

## Patentansprüche

1. Biegsames Scharnier für Brillengestelle mit einem ersten Scharnierelement (1) und einem zweiten Scharnierelement (3) mit einem ersten (21) beziehungsweise einem zweiten (7) Scharnierteil, die zur Aufnahme einer Gelenkachse (5) mit Ausnehmungen (23, 25A, 25B) ausgebildet sind, wobei das zweite Scharnierteil (7) zwischen zwei Vorsprüngen (21A, 21B) des ersten Scharnierteiles (21) derart angeordnet ist, dass sich die Ausnehmungen in der gleichen axialen Richtung (A) gegen die Wirkung einer in einem der beiden Schamierelemente angeordneten Feder (9) überlagern, wobei die Gelenkachse nicht mit einem Gewinde versehen ist und zwei Köpfe (5A, 5B) sowie einen mit den Köpfen einstückig verbundenen Körper (5C) aufweist, der verschieblich durch die Ausnehmungen (23, 25A, 25B) der Scharnierteile (7, 21) hindurch mit diesen in Eingriff bringbar ist, bis die beiden Köpfe (5A, 5B) in den beiden Ausnehmungen (25A, 25B) der Vorsprünge (21A, 21B) des ersten Scharnierteiles (21) angeordnet sind, wobei der Körper in Bezug auf die beiden Köpfe einen Absatz (D) ausbildet, um in der Ausnehmung (23) des zweiten Scharnierteiles (7) unter Versetzen des letzteren (7) in Bezug auf die axiale Richtung (A) der Ausnehmungen (25A, 25B) des ersten Scharnierteiles (21) gegen die Wirkung der Feder (9) angeordnet zu sein, **dadurch gekennzeichnet, dass** die Ausnehmung (23) des zweiten Scharnierteiles (7) einen Abschnitt (23C) aufweist, dessen Gestalt dem Körper (5C) der Gelenkachse entspricht.

2. Scharnier gemäß Anspruch 1, **dadurch gekennzeichnet, dass** der Körper (5C) der Gelenkachse und der Abschnitt (23C) mit der dem zweiten Scharnierteil (7) entsprechender Gestalt kreisförmig ausgebildet sind.

3. Biegsames Scharnier nach Anspruch 1, **dadurch gekennzeichnet, dass** die beiden Vorsprünge (21A, 21B) des ersten Scharnierteiles (21) entlang eines Profiles (27) aneinanderstoßen, wobei sich innerhalb dieses Scharnierteiles in Bezug auf die axiale Richtung (A) von hinten (27A) nach vorne (27B) in einer Ebene rechtwinklig zu dieser axialen Richtung (A) Ausnehmungen (25A, 25B) erstrecken.

4. Scharnier nach Anspruch 3, **dadurch gekennzeichnet, dass** ein Teil des sich in Bezug auf die axiale Richtung (A) nach vorne erstreckenden innenseitigen Profiles (27) einen Anschlag (27B) bildet, gegen den das zweite Scharnierteil (7) zum Liegen kommt, wenn das Scharnier in eine über die normale geöffnete Stellung hinausgehende Stellung geöffnet wird.

5. Scharnier nach Anspruch 1, **dadurch gekennzeichnet, dass** die Köpfe (5A, 5B) der Gelenkachse und die Ausnehmungen (25A, 25B) der Vorsprünge (21A, 21B) des ersten Scharnierteiles (21) einander entsprechenden sternförmige oder kannelierte vieleckige Gestaltungen aufweisen.

## Claims

1. Resilient hinge for a spectacle frame, comprising a first (1) and second (3) hinge element possessing respectively a first (21) and second (7) knuckle provided with drillings (23, 25A, 25B) for receiving a pivot pin (5) when the second knuckle (7) is engaged between the two journals (21A, 21B) of the first knuckle (21) so that the drillings are superimposed in the same axial direction (A) against the compression of a spring (9) housed in one of the two elements of the hinge the pivot pin being not providing with a thread and comprising two heads (5A, 5B) and a body (5C) secured to the two heads in order to be engaged in translation through the drillings (23, 25A, 25B) of the knuckles (7, 21) until the two heads (5A, 5B) are received in the drillings (25A, 25B) of the two journals (21A, 21B) of the first knuckle (21), the body forming with respect to the two heads a recess (D) to be received in the drilling (23) of the second hinge (7) while offsetting the latter (7) with respect to the axial direction (A) of the drillings (25A, 25B) of the first knuckle (21) against the compression of the spring (9), **characterized in that** the drilling (23) of the second knuckle (7) has a portion (23C) with a shape corresponding to the body (5C) of the pivot pin.

2. Hinge according to claim 1, **characterized in that** the body (5C) of the pivot pin and the portion (23C) with a shape corresponding to the second knuckle (7) have a circular shape.

3. Resilient hinge according to claim 1, **characterized in that** the two journals (21A, 21B) of the first knuckle (21) are contiguous along a profile (27) inside this knuckle extending from the rear (27A) to the front (27B) with respect to the axial direction (A) of the drillings (25A, 25B) in a plane perpendicular to this axial direction (A).

4. Hinge according to claim 3, **characterized in that** a part of the inner profile (27) extending forwards with respect to the axial direction (A) forms a stop (27B) against which the second knuckle (7) rests when the hinge is opened into a position passing beyond the normal open position.

5. Hinge according to claim 1, **characterized in that** the heads (5A, 5B) of the pivot pin and the drillings (25A, 25B) of the journals (21A, 21B) of the first knuckle (21) have corresponding polygonal, star-shaped or splined shapes.
